# EUROPÄISCHE PATENTANMELDUNG

(11) **EP 2 591 671 A1**
(43) Veröffentlichungstag der Anmeldung: **15.05.2013**
(21) Anmeldenummer: 12401221.2
(22) Anmeldetag: 05.11.2012
(51) Int. Cl.: A01M 7/00

(54) **Landwirtschaftliche Feldspritze**

(30) Priorität: 09.11.2011 DE 102011055163
(71) Anmelder: Amazonen-Werke H. Dreyer GmbH & Co. KG, 49205 Hasbergen (DE)
(72) Erfinder: Ehlen, Volker, 49205 Hasbergen (DE)

(57) **Zusammenfassung**

Landwirtschaftliche Feldspritze mit zumindest einem Spritzmitteltank (1), einem Klarwasserbehälter (2), zumindest einer Pumpe (5), zumindest einer Dosierarmatur, zumindest einer von der Dosierarmatur bis zu den Ausbringelementen führenden Druckleitung, wobei dem Spritzmitteltank und dem Klarwasserbehälter jeweils zumindest eine Befüllleitung (3, 4) zugeordnet sind, wobei ein Bordrechner (11) zur Steuerung und/oder Regelung von einem oder mehreren Funktionselementen der Feldspritze vorgesehen ist. Um Mittel zur Verfügung zu stellen, um in einfacher Weise für den vorgesehenen Einsatzfall eine ausreichende Menge an Klarwasser im Klarwasserbehälter für die Feldspritze bei deren Arbeitseinsatz mitzuführen ist vorgesehen, dass dem Klarwasserbehälter eine sensorische Messvorrichtung (8) zur Erfassung zumindest eines Füllstandes des sich im Klarwasserbehälter befindlichen Klarwassers zugeordnet ist, dass die sensorische Messvorrichtung mit dem Bordrechners verbunden ist, dass beim Befüllen der Spritzmitteltank der Bordrechner über die sensorische Messvorrichtung des Klarwasserbehälters den Füllstand des Klarwasserbehälters abfragt, dass der Bordrechner den aktuell ermittelten Füllstand des Klarwasserbehälters mit im Bordrechner enthaltenen Sollgrößen von Klarwasserfüllständen aufgrund eines in dem Speicher des Bordrechners hinterlegten Programmes vergleicht und bei unterschreiten der Sollgröße des Klarwasserfüllstandes durch den aktuell ermittelten Füllstand des Klarwasserbehälters einen Hinweis hierauf durch geeignete Mittel ausgibt und/oder einen Nachfüllvorgang des Klarwasserbehälters mit Klarwasser eingeleitet und/oder durchführt.

## Beschreibung

Die Erfindung betrifft eine landwirtschaftliche Feldspritze gemäß des Oberbegriffes des Patentanspruches 1.

Eine derartige landwirtschaftliche Feldspritze ist in der EP 2 319 304 A1 beschrieben. Bei dieser Feldspritze werden der Spritzmitteltank und der Klarwasserbehälter jeweils über Befüllleitungen befüllt.

Der Erfindung liegt die Aufgabe zu Grunde, Mittel zur Verfügung zu stellen, um in einfacher Weise für den vorgesehenen Einsatzfall eine ausreichende Menge an Klarwasser im Klarwasserbehälter für die Feldspritze bei deren Arbeitseinsatz mitzuführen.

Diese Aufgabe wird erfindungsgemäß dadurch gelöst, dass dem Klarwasserbehälter eine sensorische Messvorrichtung zur Erfassung zumindest eines Füllstandes des sich im Klarwasserbehälter befindlichen Klarwassers zugeordnet ist, dass die sensorische Messvorrichtung mit dem Bordrechners verbunden ist, dass beim Befüllen der Spritzmitteltank der Bordrechner über die sensorische Messvorrichtung des Klarwasserbehälters den Füllstand des Klarwasserbehälters abfragt, dass der Bordrechner den aktuell ermittelten Füllstand des Klarwasserbehälters mit im Bordrechner enthaltenen Sollgrößen von Klarwasserfüllständen aufgrund eines in dem Speicher des Bordrechners hinterlegten Programmes vergleicht und bei unterschreiten der Sollgröße des Klarwasserfüllstandes durch den aktuell ermittelten Füllstand des Klarwasserbehälters einen Hinweis hierauf durch geeignete Mittel ausgibt und/oder einen Nachfüllvorgang des Klarwasserbehälters mit Klarwasser eingeleitet und/oder durchführt.

Infolge dieser Maßnahmen wird in automatisierter Weise sichergestellt, dass der Klarwasserbehälter zu Beginn des Ausbring- und/oder Arbeitsvorganges immer mit einer ausreichenden Menge an Klarwasser gefüllt ist. Über die sensorische Messeinrichtung wird der Füllstand entsprechend detektiert. Somit ergibt sich eine Reduzierung der Bedienschritte für den Anwender und größere Möglichkeiten für eine Prozessautomatisierung.

Um für den Anwender das Befüllen des Klarwassertanks mit der richtigen Sollmenge zu erleichtern, ist vorgesehen, dass beim Befüllen der Spritzmitteltank der Bordrechner über die sensorische Messvorrichtung des Klarwasserbehälters den Füllstand des Klarwasserbehälters abfragt, dass der Bordrechner den aktuell ermittelten Füllstand des Klarwasserbehälters mit hinterlegten Mindestgrößen von Klarwasserfüllständen aufgrund eines in dem Speicher des Bordrechners hinterlegten Programmes vergleicht und bei unterschreiten der Mindestgröße des hinterlegten Klarwasserfüllstandes durch den aktuell ermittelten Füllstand des Klarwasserbehälters einen Hinweis hierauf durch geeignete Mittel ausgibt und/oder einen Nachfüllvorgang des Klarwasserbehälters mit Klarwasser eingeleitet und/oder durchführt.

Weiterhin kann eine Erleichterung der Befüllung des Klarwasserbehälters mit der richtigen Sollmenge von Klarwasser dadurch für den Anwender erleichtert werden, dass dem Klarwasserbehälter eine sensorische Messvorrichtung zur Erfassung zumindest eines Füllstandes des sich im Klarwasserbehälter befindlichen Klarwassers zugeordnet ist, dass in dem Speicher des Bordrechners eine Steuerungsbedingung derart hinterlegt ist, dass nur dann der Reinigungsvorgang zur Reinigung des Spritzmitteltank und/oder der von dem Spritzmittel durchströmten Leitungen und Ausbringelementen von dem Bordcomputer einleitbar ist, wenn ausreichend Klarwasser für den vorgesehenen Reinigungsvorgang im Klarwasserbehälter enthalten ist.

In einfacher Weise wird das Befüllen des Klarwasserbehälters mit der ausreichenden Klarwassermenge dadurch erleichtert, dass über der Bordrechner eine Aufforderung an den Anwender dann ergeht, wenn eine zu geringe Menge Klarwasser sich im Klarwasserbehälter befindet, um zumindest so viel Klarwasser in den Klarwasserbehälter nachzufüllen, um den Reinigungsvorgang ordnungsgemäß durchführen zu können.

In einfacher Weise lässt sich der Befüllvorgang dadurch durchführen, dass die zentrale Befüllleitung sich über zumindest ein zugeordnetes Umschaltventil in eine Befüllleitung für den Klarwasserbehälter und in eine Befüllleitung zum Befüllen des Spritzmitteltanks verzweigt, dass der Bordrechner während des Befüllens des Spritzmitteltanks mit Klarwasser dem Füllstand des Klarwassers im Klarwasserbehälter abfragt, dass das Ventil, welches der sich verzweigenden zentralen Befüllleitung zugeordnet ist, durch den Bordrechner zum Befüllen des Klarwasserbehälters mit Klarwasser umgeschaltet wird, wenn der Bordrechner durch die Abfrage feststellt, dass sich in dem Klarwasserbehälter eine zu geringe Menge Klarwasser zur Durchführung eines Reinigungsvorganges entsprechend der im Speicher des Bordrechners hinterlegten Daten befindet.

Um den Klarwasserbehälter in einfacher Weise befüllen zu können, ist in einer Ausführungsform vorgesehen, dass der Befüllleitung des Klarwasserbehälters eine eigene Pumpe zugeordnet ist.

Weitere Einzelheiten der Erfindung sind der Beispielsbeschreibung zu entnehmen. Die Zeichnungen zeigen
- Fig.1: einen vereinfachten Flüssigkeitsplan für die Befüllung des Spritzmitteltanks und des Klarwasserbehälters einer Feldspritze mit Klarwasser,
- Fig.2: einen weiteren vereinfachten Flüssigkeitsplan für die Befüllung des Spritzmitteltanks und des Klarwasserbehälters einer Feldspritze mit Klarwasser und
- Fig.3: einen vereinfachten Flüssigkeitsplan für die Befüllung des Spritzmitteltanks und des Klarwasserbehälters einer Feldspritze mit Klarwasser.

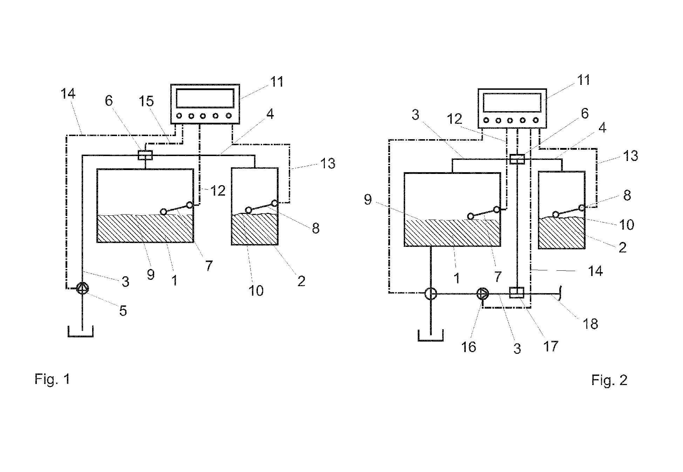

In dem in Fig. 1 dargestellten Flüssigkeitsplan für eine Feldspritze sind lediglich der Spritzmitteltank 1 und der Klarwasserbehälter 2 mit den zugeordneten Befüllleitungen 3, 4, die separate Pumpe 5 zum Befüllen des Spritzmitteltanks 1 und des Klarwasserbehälters 2, das Umschaltventil 6 in den Befüllleitungen 3, 4, die sensorischen Messeinrichtungen 7, 8 zur Erfassung des Füllstandes 9, 10 in dem Spritzmitteltank 1 und in dem Klarwasserbehälter 2 sowie dem zugeordneten Bordrechner 11 und die einzelnen Datenleitungen 12, 13, 14 dargestellt. Die übrigen üblichen Einrichtungen, Vorrichtung, Dosierarmaturen, Ausbringelemente und Leitungen der Feldspritze sind aus Vereinfachungsgründen und der Übersichtlichkeit halber nicht dargestellt.

Der Bordrechner 11 ist zur Steuerung und/oder Regelung von einem oder mehreren Funktionselemente der Feldspritze vorgesehen. In dem Spritzmitteltank 1 ist eine sensorische Messvorrichtung 7 zur Messung des Füllstandes 9 der in dem Spritzmitteltank 1 enthaltenen Flüssigkeit angeordnet. Diese sensorische Messeinrichtung 7 ist im Ausführungsbeispiel als beweglich gelagerter Schwimmer mit einem zugeordneten Potentiometer ausgebildet. Die sensorische Messeinrichtung 7 ist über eine Datenleitung 12 mit dem Bordrechner 11 verbunden.

In dem Klarwasserbehälter 2 ist ebenfalls eine sensorische Messvorrichtung 8 zur Messung des Füllstandes 10 der in dem Klarwasserbehälter 2 enthaltenen Flüssigkeit angeordnet. Diese sensorische Messeinrichtung 8 ist im Ausführungsbeispiel als beweglich gelagerter Schwimmer mit einem zugeordneten Potentiometer ausgebildet. Die sensorische Messeinrichtung 8 ist über eine Datenleitung 12 mit dem Bordrechner 11 verbunden.

In der zu dem Spritzmitteltank 1 führenden Befüllleitung 3 ist eine motorisch angetriebene separate Pumpe 5 neben der nicht dargestellten üblichen Pumpe der Feldspritze angeordnet. In dieser Befüllleitung 3 ist ein Abzweigventil 6 angeordnet. Von diesem Abzweigventil 6 führt eine weiterführende Befüllleitung 4 zu den Klarwasserbehälter 2. Das Abzweigventil 6 ist als umschaltbarer Dreiwegehahn ausgebildet. Diesem Dreiwegehahn 6 ist ein nicht dargestelltes motorisches Stellelement zugeordnet. Der Dreiwegehahn 6 und/oder das Stellelement sind über eine Datenleitung 13 mit dem Bordrechner 11 verbunden.

Diese sensorischen Messeinrichtungen 7 und 8 übermitteln über die jeweiligen Datenleitungen 12, 13 Daten über den Füllstand der Flüssigkeit in dem jeweiligen Behälter 1, 2 an den Bordrechner 11.

Beim Befüllen des Spritzmitteltanks 1 fragt der Bordrechner 11 über die sensorische Messeinrichtung 8 des Klarwasserbehälters 2 den Füllstand 10 des Klarwasserbehälters 2 ab. Der Bordrechner 11 ermittelt somit aktuell den Füllstand 10 des Klarwassers in dem Klarwasserbehälter 2. Der Bordrechner 11 vergleicht dann den aktuell ermittelten Füllstand 10 des Klarwassers in dem Klarwasserbehälter 2 mit im Speicher des Bordrechners 11 enthalten Sollgrößen von Klarwasserfüllständen aufgrund eines in dem Speicher des Bordrechners 11 hinterlegten Programmes. Bei unterschreiten der Sollgröße des Klarwasserfüllstandes 10 gibt der Bordrechner 11 hierauf durch geeignete Mittel einen Hinweis aus und/oder leitet ein Nachfüllvorgang des Klarwasserbehälters 2 mit Klarwasser ein und/oder führt diesen durch. Um den Befüllvorgang durchzuführen, übermittelt der Bordrechner 11 Stellsignale über die Datenleitung 15 an das motorisches Stellelement des Dreiwegehahnes 6, so dass der Dreiwegehahn 6 in die entsprechende Position gebracht wird, damit der Klarwasserbehälter 2 mit Klarwasser befüllt wird.

Hierbei wird in Weiterbildung der Erfindung beim Befüllen des Spritzmitteltanks 1 der Bordrechner 11 über die sensorische Messeinrichtung 10 des Klarwasserbehälters 2 den Füllstand 10 des Klarwasserbehälters 2 abfragen. Der Bordrechner 11 vergleicht dann den aktuell ermittelten Füllstand 10 des Klarwasserbehälters 2 mit hinterlegten Mindestgrößen von Klarwasserfüllständen aufgrund eines in dem Speicher des Bordrechners 11 hinterlegten Programmes. Bei unterschreiten der Mindestgröße des hinterlegten Klarwasserfüllstandes durch den aktuell ermittelten Füllstand 10 des Klarwasserbehälters 2 gibt der Bordrechner 11 einen Hinweis hierauf durch geeignete Mittel aus und/oder leitet ein Nachfüllvorgang des Klarwasserbehälters 2 mit Klarwasser ein oder führt diesen in vorbeschriebener Weise durch.

In nicht dargestellter Weise ist der Spritzmitteltank 1 zu seiner Innenreinigung mit Reinigungselementen ausgestattet, um den Spritzmitteltank 1 mit Klarwasser aus dem Klarwasserbehälter 2 zu reinigen. Weiterhin ist die Feldspritze so ausgestaltet, dass die Spritzmittel führenden Leitungen mit der Reinigungsleitung verbindbar sind, umso diese Spritzmittel führenden Leitungen ebenfalls mit Klarwasser aus dem Klarwasserbehälter 2 zu reinigen. Dieser Reinigungsleitung sind Ventil- und/oder motorische Elemente zugeordnet.

Vor der Durchführung des Reinigungsvorganges fragt der Bordrechner 11 über die sensorische Messeinrichtung 8 den Füllstand 10 des Klarwassers in dem Klarwasserbehälter 2 ab. Hierbei ist in dem Speicher des Bordrechners 11 eine Steuerungsbedingung derart hinterlegt, dass nur dann der Reinigungsvorgang zur Reinigung des Spritzmitteltanks 1 und/oder der von dem Spritzmittel führenden Leitung und Ausbringelementen von dem Bordcomputer 11 eingeleitet wird, wenn ausreichend Klarwasser für den vorgesehenen Reinigungsvorgang im Klarwasserbehälter 2 enthalten ist.

Hierbei ergeht dann über den Bordrechner 11 eine Aufforderung an den Anwender, wenn eine zu geringe Menge Klarwasser sich im Klarwasserbehälter 2 befindet, zumindest soviel Klarwasser in den Klarwasserbehälter 2 nachzufüllen, um den Reinigungsvorgang ordnungsgemäß durchführen zu können.

Der Bordrechner 11 fragt während des Befüllens des Spritzmitteltanks 1 mit Klarwasser den Füllstand 8 des Klarwassers im Klarwasserbehälter 2 ab. Das Ventil 6, welches der sich der verzweigenden zentralen Befüllleitung 3, 4 zugeordnet ist, wird durch den Bordrechner 11 zum Befüllen des Klarwasserbehälters 2 mit Klarwasser umgeschaltet, wenn der Bordrechner 11 durch die Abfrage feststellt, dass sich in dem Klarwasserbehälter 2 eine zu geringe Menge Klarwasser zur Durchführung eines Reinigungsvorganges entsprechend der im Speicher des Bordrechners 11 hinterlegten Daten befindet.

Der Flüssigkeitsplan für die Feldspritze gemäß Fig. 2 unterscheidet sich von dem Flüssigkeitsplan für die Feldspritze gemäß Fig. 1 dadurch, dass keine separate Pumpe in der Befüllleitung 3 angeordnet ist, sondern die Befüllung über die übliche Pumpe 16 der Feldspritze erfolgt. Die Befüllleitung 3 verzweigt sich ebenfalls über ein als Dreiwegehahn ausgebildetes Umschaltventil 6 in eine Befüllleitung 3 für den Spritzmitteltank 1 und eine Befüllleitung 4 für den Klarwasserbehälter 2. Im Übrigen gelten die Ausführungen zu den Flüssigkeitsplan der Feldspritze gemäß Fig. 1.

In der als Befüllleitung 3 dienenden Leitung ist hinter der Pumpe 16 ein als Dreiwegehahn ausgebildetes Umschaltventil 17 angeordnet, von welchem die zu der üblichen Dosierarmatur einer Feldspritze führenden Spritzmitteldruckleitung 18 abzweigt. Dieser Druckleitung 18 wird mit Spritzmittel, welches sich im Spritzmitteltank 1 befindet, von der Pumpe 16 versorgt, wenn der Dreiwegehahn 17 entsprechend umgeschaltet ist.

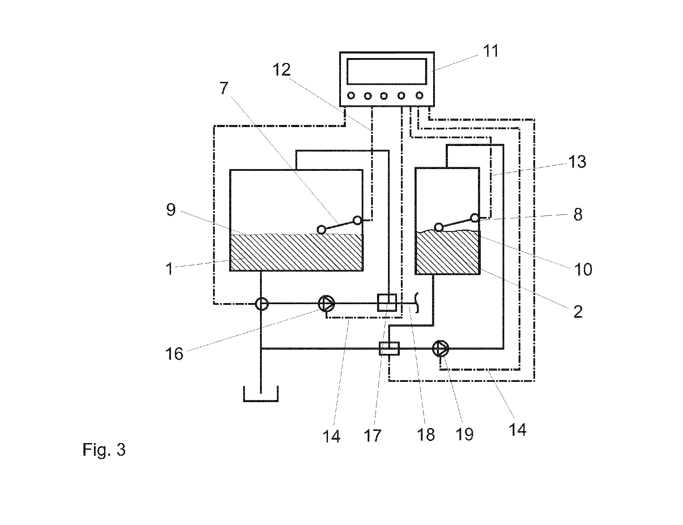

Der Flüssigkeitsplan für die Feldspritze gemäß Fig. 3 unterscheidet sich von dem Flüssigkeitsplan für die Feldspritze gemäß Fig. 2 dadurch, dass eine separate Pumpe 19 in der Befüllleitung 20 für die Befüllung des Klarwasserbehälters 2 vorgesehen ist. Im Übrigen gelten die Ausführungen zu den Flüssigkeitsplänen der Feldspritze gemäß Fig. 1 und 2.

## Patentansprüche

1. Landwirtschaftliche Feldspritze mit zumindest einem Spritzmitteltank, einem Klarwasserbehälter, zumindest einer Pumpe, zumindest einer Dosierarmatur, zumindest einer von der Dosierarmatur bis zu den Ausbringelementen führenden Druckleitung, wobei dem Spritzmitteltank und dem Klarwasserbehälter jeweils zumindest eine Befüllleitung zugeordnet sind, wobei ein Bordrechner zur Steuerung und/oder Regelung von einem oder mehreren Funktionselementen der Feldspritze vorgesehen ist, **dadurch gekennzeichnet, dass** dem Klarwasserbehälter (2) eine sensorische Messvorrichtung (8) zur Erfassung zumindest eines Füllstandes (10) des sich im Klarwasserbehälter (2) befindlichen Klarwassers zugeordnet ist, dass die sensorische Messvorrichtung (8) mit dem Bordrechner (11) verbunden ist, dass beim Befüllen der Spritzmitteltanks (1) der Bordrechner (11)über die sensorische Messvorrichtung (8) des Klarwasserbehälters (2) den Füllstand (10) des Klarwasserbehälters (2) abfragt, dass der Bordrechner (11) den aktuell ermittelten Füllstand (10) des Klarwasserbehälters (2) mit im Bordrechner (11) enthaltenen Sollgrößen von Klarwasserfüllständen aufgrund eines in dem Speicher des Bordrechners (11) hinterlegten Programmes vergleicht und bei unterschreiten der Sollgröße des Klarwasserfüllstandes (10) durch den aktuell ermittelten Füllstand (10) des Klarwasserbehälters (2) einen Hinweis hierauf durch geeignete Mittel ausgibt und/oder einen Nachfüllvorgang des Klarwasserbehälters (2) mit Klarwasser eingeleitet und/oder durchführt.

2. Landwirtschaftliche Feldspritze nach Anspruch1, **dadurch gekennzeichnet, dass** beim Befüllen der Spritzmitteltank (1) der Bordrechner (11) über die sensorische Messvorrichtung (8) des Klarwasserbehälters (2) den Füllstand (10) des Klarwasserbehälters (2) abfragt, dass der Bordrechner (11) den aktuell ermittelten Füllstand (10) des Klarwasserbehälters (2) mit hinterlegten Mindestgrößen von Klarwasserfüllständen aufgrund eines in dem Speicher des Bordrechners (11) hinterlegten Programmes vergleicht und bei unterschreiten der Mindestgröße des hinterlegten Klarwasserfüllstandes durch den aktuell ermittelten Füllstand (10) des Klarwasserbehälters (2) einen Hinweis hierauf durch geeignete Mittel ausgibt und/oder einen Nachfüllvorgang des Klarwasserbehälters (2) mit Klarwasser eingeleitet und/oder durchführt.

3. Landwirtschaftliche Feldspritze nach zumindest einem der vorstehenden Ansprüche, mit zumindest einer vom Klarwasserbehälter (2) zu dem Spritzmitteltank (1) führenden und mit Reinigungselementen ausgestatteten Reinigungsleitung, wobei der Reinigungsleitung von einem Bordrechner zu steuernde Ventil- und/oder motorische Förderelemente zugeordnet sind, **dadurch gekennzeichnet, dass** dem Klarwasserbehälter (2) eine sensorische Messvorrichtung (8) zur Erfassung zumindest eines Füllstandes (10) des sich im Klarwasserbehälter (2) befindlichen Klarwassers zugeordnet ist, dass in dem Speicher des Bordrechners (11) eine Steuerungsbedingung derart hinterlegt ist, dass nur dann der Reinigungsvorgang zur Reinigung des Spritzmitteltanks und/oder der von dem Spritzmittel durchströmten Leitungen und Ausbringelementen von dem Bordcomputer (11) einleitbar ist, wenn ausreichend Klarwasser für den vorgesehenen Reinigungsvorgang im Klarwasserbehälter (2) enthalten ist.

4. Landwirtschaftliche Feldspritze nach Anspruch 3, **dadurch gekennzeichnet, dass** über der Bordrechner (11) eine Aufforderung an den Anwender dann ergeht, wenn eine zu geringe Menge Klarwasser sich im Klarwasserbehälter (2) befindet, um zumindest soviel Klarwasser in den Klarwasserbehälter (2) nachzufüllen, um den Reinigungsvorgang ordnungsgemäß durchführen zu können.

5. Landwirtschaftliche Feldspritze nach Anspruch 3, **dadurch gekennzeichnet, dass** die zentrale Befüllleitung (3) sich über zumindest ein zugeordnetes Umschaltventil (6) in eine Befüllleitung (4) für den Klarwasserbehälter und in eine Befüllleitung (3) zum Befüllen des Spritzmitteltanks (1) verzweigt, dass der Bordrechner (11) während des Befüllens des Spritzmitteltanks (1) mit Klarwasser dem Füllstand (10) des Klarwassers im Klarwasserbehälter (2) abfragt, dass das Ventil (6), welches der sich verzweigenden zentralen Befüllleitung (3) zugeordnet ist, durch den Bordrechner (11) zum Befüllen des Klarwasserbehälters (2) mit Klarwasser umgeschaltet wird, wenn der Bordrechner (11) durch die Abfrage feststellt, dass sich in dem Klarwasserbehälter (11) eine zu geringe Menge Klarwasser zur Durchführung eines Reinigungsvorganges entsprechend der im Speicher des Bordrechners (11) hinterlegten Daten befindet.

6. Landwirtschaftliche Feldspritze nach zumindest einem der vorstehenden Ansprüche, **dadurch gekennzeichnet, dass** der Befüllleitung des Klarwasserbehälters (2) eine eigene Pumpe (5, 16) zugeordnet ist.
